# EUROPEAN PATENT SPECIFICATION

(11) **EP 1 419 645 B1**
(45) Date of publication and mention of the grant of the patent: **12.12.2007**
(21) Application number: 02758688.2
(22) Date of filing: 07.08.2002
(51) Int. Cl.: H04M 1/725, H04M 1/65

(54) **PORTABLE ELECTRONIC DEVICE HAVING RECORDING CAPABILITY**
TRAGBARE ELEKTRONISCHE VORRICHTUNG MIT AUFZEICHNUNGSFÄHIGKEIT
DISPOSITIF ELECTRONIQUE PORTATIF DE GRANDE CONSOMMATION

(30) Priority: 10.08.2001 US 927592; 30.04.2002 US 136978
(43) Date of publication of application: 19.05.2004
(73) Proprietor: Koninklijke Philips Electronics N.V., 5621 BA Eindhoven (NL)
(72) Inventor: BULTHUIS, Willem, NL-5656 AA Eindhoven (NL); SHTEYN, Yevgeniy, E., NL-5656 AA Eindhoven (NL)
(74) Representative: Deguelle, Wilhelmus H. G.
(86) International application number: PCT/IB2002/003283
(87) International publication number: WO 2003/015384

(56) References cited:
- JP-A- 10 233 985
- US-A- 5 825 327
- US-B1- 6 282 362

## Description

### RELATED APPLICATIONS

The following related applications are referred to:
- WO-A-01/44912, inventors Willem Bulthuis et al.; "HAND-EAR USER INTERFACE FOR HAND-HELD DEVICE";
- WO-A-02/063453, inventor Rik Sagar, "RAPID RETRIEVAL USER INTERFACE DESIGNED AROUND SMALL DISPLAYS AND FEW BUTTONS FOR SEARCHING LONG SORTED LISTS";
- WO-A-02/17116, inventor Leila Kaghazian, "SELECTIVE SENDING OF PORTIONS OF ELECTRONIC CONTENT".

### BACKGROUND OF THE INVENTION

### Field of the Invention

The invention relates to the field of recording real-time communications, especially in the consumer electronics field.

### Related Art

In the telephonic arts, it is known to record voice mail when the person being called does not answer the phone. The 911 services ("911" is the national number in the U.S. for emergence calls) also record telephone conversations as part of their service. However, recording services are not sufficiently flexible to accommodate all user needs.

JP 10 233985 A discloses a system including a personal computer, which is used as an image managing unit, a digital camera, a GPS receiver, and an SSFDC (Solid State Floppy Disk Card), which is used as a recording medium. The SSFDC, which is a card-like memory, is mounted in the digital camera and the captured images are recorded as digital image data in the SSFDC. The GPS receiver can be connected to or built into the digital camera. The GPS receiver obtains the present location and time through the GPS. The digital camera obtains GPS information, which includes the position and time information about the captured image, from the GPS receiver. The digital camera records the captured images as well as the GPS information relating to each captured image in the SSFDC. The SSFDC contains a plurality of captured images, captured by the digital camera and the position and time information about each captured image. The SSFDC can be removed from the digital camera and mounted in an ATA (AT attachment) adapter to be inserted into a PCMCIA (Personal Computer Memory Card International Association) drive of the personal computer. Thereby, the data recorded in the SSFDC can be transferred to the personal computer.

US-5,825,327 discloses a GPS receiver having multiple GPS antennas. Also described is a method of tracking employing the GPS receiver and a communication transmitter. Also described is a garment having a GPS receiver and a GPS antenna and a communication antenna and a communication transmitter.

### SUMMARY OF THE INVENTION

It is desirable to provide additional recording functionality for real-time communication.

According to the invention a device according to claim 1 and a method according to claim 12 are provided. Favorable embodiments are defined in the dependent claims.

Advantageously this is achieved by automatically recording real-time communication in response to a user initiating or accepting the real-time communication. Advantageously, the stored communications can serve as a memory aid or as an opportunity to forward copies of a conversation to additional individuals. For example, the user may want to store the communications at a home server, or the user may want to have the communications automatically transcribed and stored or forwarded as text files, etc. As another example, such automatic recording provides an advantage to the user of a mobile phone. Instead of taking notes or taking action while communicating in real-time, e.g., while driving, the user can postpone these activities to a more convenient moment as the recording is going to be available. The invention therefore records real time communications and stores them as data to enable people or data processing systems to retrieve them. This is a helpful feature, e.g., to find back information about past events addressed in the communication recorded, to determine or verify a certain context wherein certain events took place, etc. It has been known to record telephone conversations, e.g., by emergency services ("dial 911") and law officers. The invention, however, addresses the consumer functionality that preferably is integrated with the communication device such as a mobile phone, or with the communication service provided to consumers by the service providers.

More specifically, the invention relates to a consumer electronics communication device. The device has a first functionality adapted to enable real-time communication via the device; and a second functionality to enable automatic recording, e.g., by default, of the real time communication in response to a user of the device initiating or accepting the real time communication. Preferably, the first functionality comprises at least one user interface mechanism for providing real-time audio and/or visual information to a user and to receive real-time audio and/or visual information from the user. Preferably, the device comprises a user input to enable the user to select a portion of the real-time communication for the recording. For example, while the user is discussing an issue via the device with another party, the user wants to store, for use later on, a specific piece of information being brought up in the discussion, e.g., a telephone number being mentioned, navigation directions, a street address, etc. The user then asks the other party to repeat that piece of information. While the user holds down a "record" key on the device, the repeated piece of information gets recorded.

Preferably, the device comprises at least one organizational mechanism for organizing the recorded communications in a retrievable form for the user. The organization is based on, e.g., time of the day at which the communication got recorded, caller-ID, or another criterion.

The device preferably has an onboard storage for storing the recorded communication. For example, the device has a solid state memory card/module or a HDD module with a small form factor that stores a copy of the communication or conversation conducted in real time. The module is preferably removable and useable with, e.g., a laptop or desktop PC.

In another embodiment the device has an output for transmitting a signal to a storage, the signal being representative of the real time communication for being recorded at the storage. The device is connected via a wire or in a wireless fashion with the storage. For example, the device has a mobile telephone and the storage comprises a separate module that communicates with the mobile telephone using Bluetooth or another short-range communication protocol. The storage module can be kept in a suitcase or carried in another convenient place, so that the weight or shape does not interfere or hamper usage of the phone.

The device preferably comprises an opt-out mechanism in order to exempt a particular communication from being recorded. For example, the opt out mechanism comprises a prompter that asks at least the user or another party involved in the real time communication to signal if there is a desire for omitting the recording. As another example, the opt-out mechanism comprises a distinct, respective, physically actuatable opt-out selector apparatus located on an exterior of the device.

Preferably, the device comprises a last-communication rewind mechanism for replay of at least a part, e.g., the last 5 minutes, of the communication recorded most recently. For example, the last-communication rewind mechanism comprises a distinct, respective, physically actuatable selector mechanism located on an exterior of the device to retrieve this part. As another example, the device is voice-controllable and the rewind mechanism is activated upon a specific voice command, in order to enable hands-free operation. The storage of the last N minutes is achieved, e.g., through a circular buffer that starts overwriting itself when full.

An embodiment of the device comprises a thumbwheel for scrolling through recorded communications. A thumbwheel enables easy operation while the device is being held in one hand.

The invention is particularly, but not exclusively, relevant to a device as discussed above that comprises a mobile phone.

An embodiment is represented by a method for offering a service to subscribers. The method comprises enabling automatic, or default, recording of at least part of a real-time communication initiated or accepted by at least one subscriber. The method comprises enabling playback of subscriber-selected ones of the recorded real-time communications, responsive to at least one subscriber request. In this manner, the recording and storage can be delegated to a network, e.g., a dedicated server on a communication network. As a result, the communication device can be kept lean, and legacy devices can make use of the service. The network enables organizing the recorded communications for retrieval and playback by at least one subscriber. For example, a first subscriber would like to have his/her recordings organized according to time: the recordings most recently made are presented at the top of a list. Another subscriber likes to organize the recordings according to caller-ID. Yet another subscriber likes to store the recordings in an audio format, whereas still another subscriber wants to have the recordings stored in a text format, created through automatic transcription from audio using speech recognition software. A specific subscriber may want to have the option to be able to organize or represent the recordings in a variety of ways, examples of which are discussed above, dependent on his/her needs of the moment. A proper user interface (e.g., graphical or voice controlled) then enables the subscriber to select the mode of organization or representation. As the recording, processing and storage is delegated to a dedicated server, quality of the recording, processing and organizing can be optimized and/or customized. These activities need not be compromised either, as the dedicated server is professionally maintained by the service provider using state-of-the art software to implement the service.

The service preferably comprises offering subscribers and/or their interlocutors an opt-out feature so that given ones of their communications will not be recorded. The service preferably enables the subscriber to select a portion of the real time communication for recording. For example, pushing a button on the device during the communication automatically activates the recording of the succeeding portion of the communication, until the button is released.

The service preferably comprises offering subscribers a last-communication rewind feature for retrieval of a copy of at least part of the real time communication recorded most recently.

An implementation uses a module with a storage for coupling with the communication device for enabling automatic recording of the real time communication in response to a user of the device initiating or accepting the real time communication. The module is coupled galvanically, electrically or in a wireless manner with the device. Preferably, the module is controllable via a user-interface of the device. For example, a certain key or pattern of keys is reserved for user-interaction with the module to implement, e.g., scrolling through the communication stored on the module, or replaying the communication most recently recorded, or to activate the recording during a real time communication upon a user input. The module preferably, comprises at least one organizational mechanism for organizing the recorded communications in a retrievable form for the user. The module preferably comprises an opt-out mechanism adapted to exempt a particular communication from recording.

The invention also relates to a storage medium readable by a data processing device. The medium carries software adapted to perform operations comprising: detecting initiation or acceptance of a live communication by a user of a consumer electronics communication device; and recording the live communication, preferably under user-determined or selectable conditions. The software may also enable to forward the recording to a remote destination, e.g., determined by default or specified by the user or the communication system. Further objects and advantages will be apparent in the following.

Another embodiment of the invention is represented by a system, method and/or device that enables a user using, e.g., a capture device to capture audible and/or visual impressions and/or context information. Data captured by the device can be: stored for later processing or usage, passed over to e.g., a remote server or device, or can be processed immediately whereby the processed data is stored and/or passed over. The captured data is preferably stored, processed or passed over with a time stamp and/or a location stamp. In the latter case a GPS system or another location finding technology (e.g., land, sea or air based beacons) provides the data for the geographic location of the user at the time of the recording, processing or passing over of the particular piece of information.

In one implementation of the invention a collection of recordings forms a personal log or diary/journal for the user. It is yet another implementation aspect of the invention whereby capturing can be continuous, event-triggered (e.g., heart-beat of the user, detection of a specific sound, coming within range of a specific object, etc.), user-controllable (voice activated, push-button) or controllable by another, possibly remotely located, other party. In the latter case, a child can be given such a capturing device, integrated within, e.g., a piece of clothing or bicycle. A parent can remotely activate the device at any time. In one embodiment of the invention the device sends the captured data (e.g., audio, video and/or other data) to a remote server or stores it locally for download and post-processing later on. The data may be sent over RF waves using an existing infrastructure (e.g., two way Satellite, GSM or a wireless local area network). The captured data may comprise captured audio and or video together with relevant contextual information. Examples of contextual information are, e.g., time based, location based (e.g., from a GPS system), a local condition based, a condition of the person based etc. Generally speaking the capture device can be a tracking device for a variety of, typically moving, objects (like any means of transportation such as a car, a bicycle etc.) or persons or animals. The tracking device should preferably be remotely controllable (at least for switching on/of and for enabling to transmit captured audio/video with the contextual information). The captured audio/video data may best be filtered (to a version of the data that at least contains basic characteristics or contains relevant scenes etc.) before a possible storage and/or transmission in order to cut down on the amount of data. This will facilitate an efficient search through the data. It may also ease on storage as well transmission bandwidth requirements for a tracking system. The data may be stored locally in the tracking device as well as at a remote location.

In yet another implementation of the invention the collection of recordings forms a personal log or diary/journal for the user can be used for an automatic creation of logbook entries for retrieval later on.

In another embodiment of the invention a time stamp and/or a location stamp is used for an entry into, e.g., a database for retrieving information that is expected to be of any relevance to the user. As an example the retrieved information using the location stamp might provide the user, who is e.g., traveling in a lesser-known area, about some information of the area. This might be very useful, e.g., for a tourist or a businessperson. In combination with the time stamp the retrieved information might provide the user with advance knowledge of, e.g., an upcoming local event. The retrieved information might be retrieved from, e.g., a database of relevant information but it might also be received from, e.g., a service operating using wireless transmission media (e.g., RF waves).

### BRIEF DESCRIPTION OF THE DRAWING

Fig. 1 is a schematic diagram of a device in accordance with the invention;
Fig. 2 shows a network embodiment;
Fig. 3 is a flowchart of certain operations in accordance with the invention;
Fig. 4 is a block diagram of an implementation of the invention in a cell phone; and
Fig. 5 is a block diagram of system with a capture/tracking device.

### DETAILED DESCRIPTION OF THE PREFERRED EMBODIMENTS

The term "communication" shall be used herein to include telephone calls, whether audio, video, or multimedia in nature, and whether or not occurring via conventional telephonic devices or via the Internet or another data network. The term "conversation" shall be synonymous with communication and shall not exclude non-audio media.

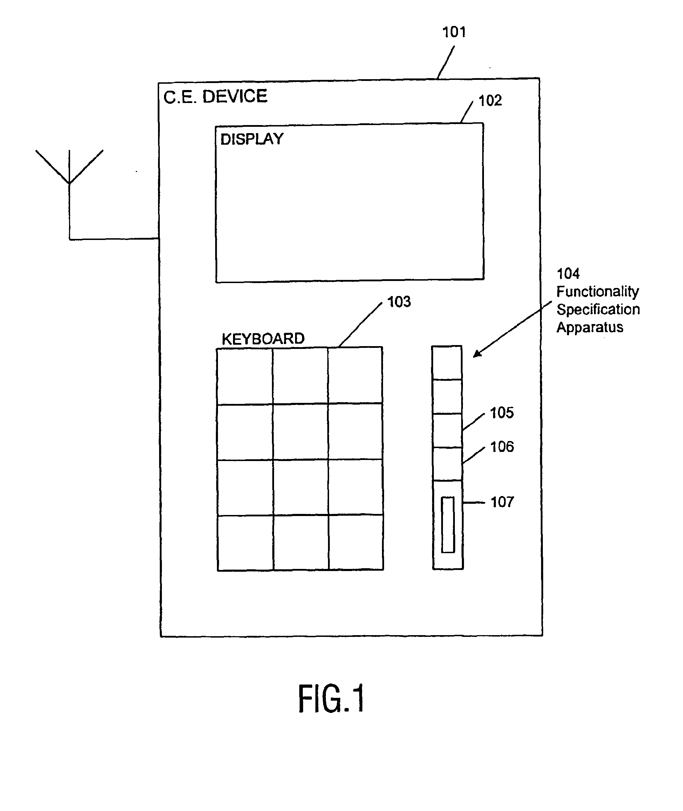

Fig.1 is a schematic diagram of a consumer electronics device 101 in accordance with the invention. The particular consumer electronics device pictured is a mobile phone. However, the invention is equally applicable to other types of phones, including videophones, or other real-time communications devices, which might include personal computers connected to the Internet. Visible in the diagram are a display 102, a keypad 103 and additional functionality specification apparatus 104. The functionality specification apparatus 104 shown includes an opt- out-of-recording button 105, a last-conversation-rewind button 106, and a thumb wheel 107, which may be in accordance with U.S. Pat. App. Ser. No. 09/780,229 referred to above. These functionality specification devices may be fixed function or may be programmable. Other options for specification of functionality, such as touch screens or pointer devices, are well known to those of ordinary skill in the art and may be readily substituted for the apparatus shown.

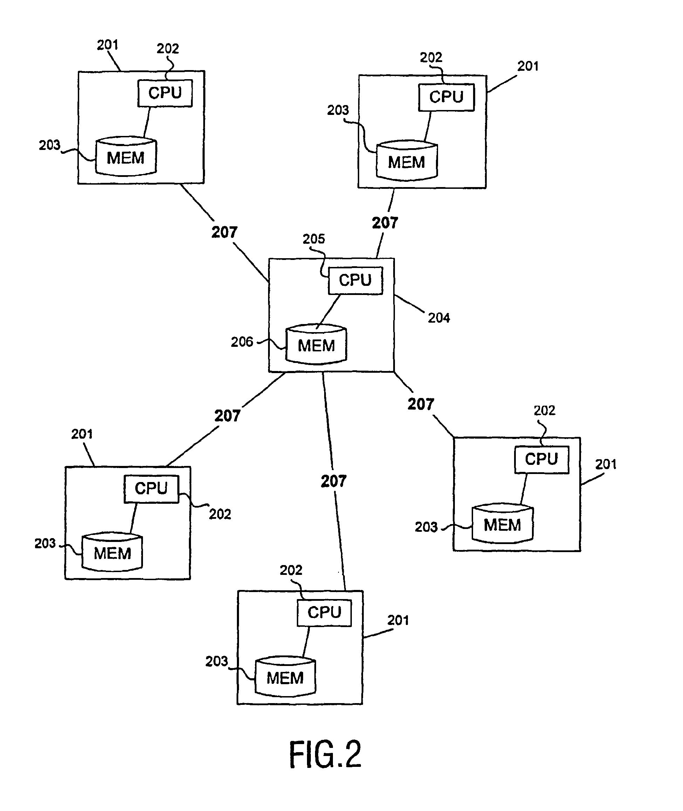

Fig.2 shows a network embodiment of the invention. A plurality of consumer electronics devices 201 are networked to a central server 204. The server 204 includes a memory 206 and a processor 205. Each consumer electronics device 201 also includes a processor 202 and a memory 203. The consumer electronics devices 201 include real time communication devices, such as the cell phone of Fig.1, any other type of phone, a personal computer, or a television with a set top box. The network may include a telephone network, a LAN, the Internet, or any other type of analog or digital network. The connections 207 may be wired or wireless.

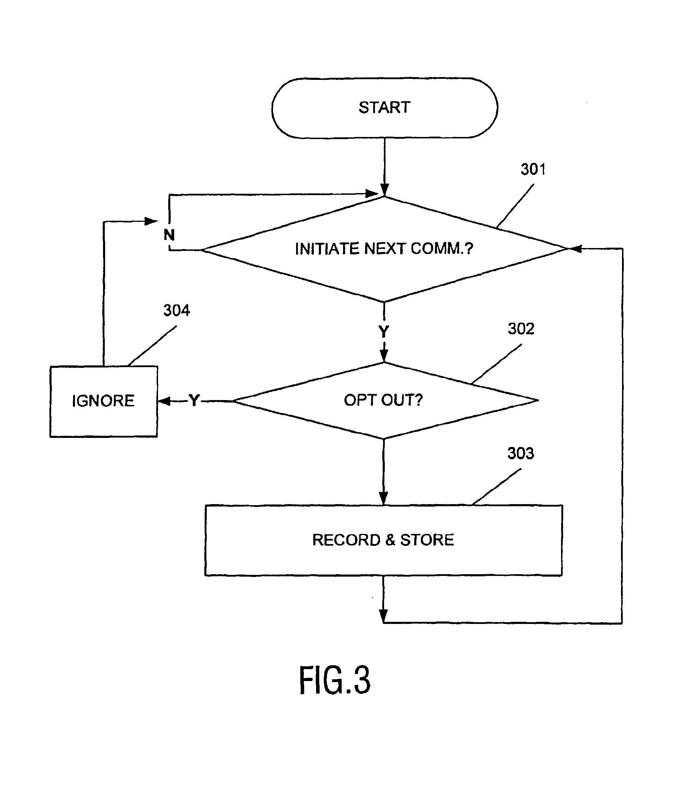

Fig.3 is a flow chart showing operation of the invention. These operations may occur in a local processor 202, or in a central processor 205 for a network, or they may be distributed between the local processor and the network server.

At 301 it is tested whether a communication is started. Typically, communication is started when the user answers the phone or when the user makes a phone call. It may or may not be desirable to begin recording as soon as the user starts using the phone. A call can be detected in response to hearing tones transmitted from the phone. It may be preferable to wait until an actual two-way communication is established, either when a remote user has picked up the phone or when the voice mail of the remote user has answered. For instance, if the user initiates the call, recording could start when a voice is detected on the other end.

As used herein, the term "remote user" does not necessarily mean that the other user is at a great distance. The remote user might be just down the hall from the first user. The term "remote user" means a user other than the one who is actually using the device that is originating the subject recording. The remote user need not have any control over the same device or have a compatible device.

At 302 it is tested whether anyone has opted out of recording. Opting out may be in the form of pressing of the button 105 by the user. This button is, for example, of the sort that needs to be pushed for each call, or it may be of the sort that once pushed stays down until it is pushed again. Or, there may be a programmable opt out option in the local communication device or in the network.

In addition, laws in some countries may require that the remote user be given the opportunity to opt out of recording. This can be achieved, e.g., by automatically prompting the remote user to press some key on his or her keypad prior to beginning speaking if recording is not desired.

If opt out is selected, then the communication is not selected per 304, and control should be returned to box 301.

If opt out is not selected, the communication is recorded and stored in a usable form at 303. Storing may involve deleting extraneous information such as dial tone and numeric tones. Other extraneous information may be deleted as well. Information may be added to facilitate storing and/or retrieving the recorded call, e.g., time at which the call was made; location where received (location of cell phones can be tracked), etc.

The retrievable form will typically involve some form of organization of the stored data. If a central server 204 is used to store the communications, the organization may take any suitable form, including use of a keyword-oriented database. The following are examples of organization strategies that might be employed by the designer:
- order of receipt, e.g. via sequential memory access;
- time and date of receipt, e.g. via direct memory access;
- some identification of the remote user who participated in the communication, such as phone number; or
- folders given user-selected names, with communications being further organized within the folders. The user may have communications first buffered in a cache from which the user can store the recording in the appropriate folder, e.g. manually or through another user input, in the appropriate folder. For example, caller-ID can be used to automatically allocate the recording to the proper folder.

The above list only gives a few examples of the many strategies for organizing communications that might be employed by a skilled system and/or user interface designer.

Commonly, various database management techniques will need to be used. For instance, it may be desirable to delete all communications that are older than a certain number of days; or there may be some numeric limit on the number of communications that may be stored.

The designer may choose to store a small portion of the communications, perhaps the most recent one or two, in the local memory 203, while storing the bulk of the communications in a memory 206 associated with a network server. The thumb wheel 107 may advantageously be included to facilitate ease of scrolling through stored phone calls, e.g. as specified in U.S. Pat. App. Ser. No. 09/464,855 mentioned above.

The organization of the communications may, advantageously, offer a number of features. For instance, a "last conversation rewind" feature may be implemented. Such a feature may be activatable, for instance, by button 106, and would allow a user to replay the conversation most recently recorded. Such replay would allow taking notes or clarifying points that the user did not understand. The system preferably offers the following additional capabilities:
- the communication may be stored in digital format, e.g. wav format; mp3; etc.
- playback controls such as: speed, volume, pause, rewind, fast forward, and so forth,
- forwarding conversations or transcoded versions thereof to other users, e.g., as voice mail or as an attachment to e-mail, etc.;
- transferring recordings to some additional medium; and
- converting stored conversations to text via speech recognition, and forwarding such text via fax or e-mail to a remote user.

Operation of the server 206 may be by a commercial service, for instance by the wireless service provider in the case of mobile phones. The service provider may charge fees for recording, storing and retrieving communications.

The user of the device is preferably enabled to have a call recorded that s/he initiates as well as an incoming call. In one embodiment of the invention, recording starts as soon as dial tones or "ringing" tones are detected. Some countries use different tones for different call status, but the periodicity and frequency spectrum is sufficient to recognize the tones as such. For calls received, starting recording is not a major issue, since the recording can begin when the user answers the phone. For calls initiated at the device, optionally, in a post-processing step (after completion of the call and therefore after recording), the dial tones get deleted under software control to compact the recording. In another embodiment, only a single one of the busy tones or of the calling-in tones gets recorded using a software procedure that, in a repetitive tone sequence, overwrites a previous similar tone with the current one in the recording memory. In yet another embodiment, the abrupt break of the dial tone sequence (when the other party picks up the phone) may have an acoustic fingerprint that serves as a signal to start the recording.

The invention is especially relevant to users of mobile communication devices such as cell phones. Typically, when on the move, the user does not have the opportunity to both juggle the phone and write down some piece of information that he other party is supplying via the phone in real-time. Similarly, when making or receiving a call while driving, the user has to keep his/her eyes on the traffic and has to remain aware of the road conditions. It is therefore advantageous for the user to be able to replay the conversation if and when needed.

The recording can, but need not, be made at the device itself. For example, a cell phone can be equipped with a recording component comprising, e.g., a flash memory card or a hard disk drive unit (HDD) with a small form-factor. The recording component can be accommodated in the cell phone or can be made a separate module that is galvanically or wirelessly coupled with the communication device. In the latter case, the module preferably uses a suitable short-range communication protocol, e.g., Bluetooth. The recording components as a separate module can be an after-market add-on. Play-out of the recording can be through the loudspeaker of the cell phone, of a laptop PC or through another loudspeaker, e.g. the stereo system of the user's car using a suitable connection. Alternatively, the module can be equipped with its own loudspeaker.

The recording can also be (part of) a service on a communication network. For example, the user can lease storage space on the network for buffering of the recordings, e.g., as is similarly being done for voice mails. An application server processes the communication information and converts it to a digital format suitable for a sound file within this context and for the expected quality, e.g., using the wav format. Selecting a dedicated telephone number or other unique identifier, e.g. a URL, gives the user access to his/her recordings. Alternatively to the "last conversation rewind button" described above, the communication device or recording component may have other dedicated buttons or user input interfaces to initiate the retrieval of one or more of the recordings from the network in a user-friendly manner. Preferably, user-access to stored recordings is through an authentication process, e.g., using a password or other unique identifier of the user and/or of the communication device. In case the recordings are stored on the network, the communication device may serve as a controller to have these recordings made and/or retrieved from the network. Alternatively, or in addition, the recordings, either as audio data or transcribed text data, are retrievable from the network from another device, e.g., laptop or desktop PC with the proper connection hardware and software.

The recordings are preferably stored in digital form, possibly after sampling an analog signal. In this manner, compression techniques can be used to save memory space. Digital compression also saves bandwidth when forwarding the recording, e.g. as an attachment to an e-mail or as a stand-alone compressed sound file for use among audio-based communication devices.

Caller-ID or other profiling information (e.g. time of the day, geographic location, day of the week, etc.) may be used to select for which communications to skip the recording or to explicitly carry out the recording.

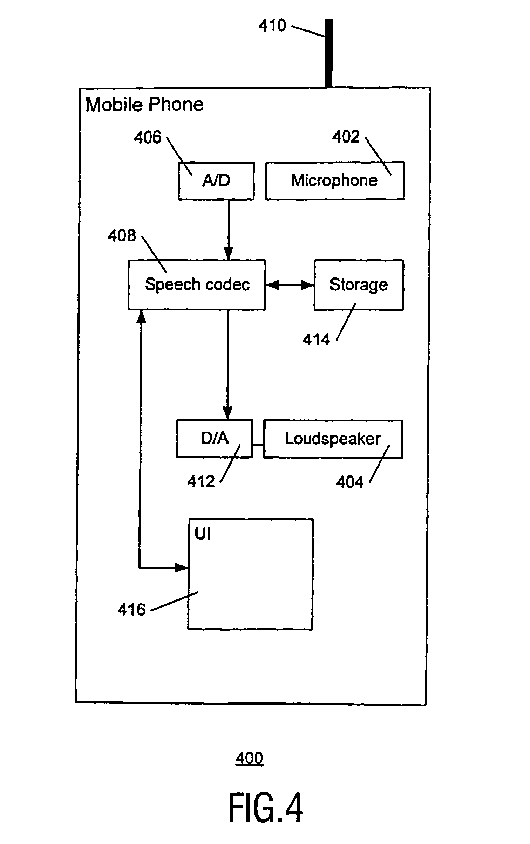

Fig.4 is a block diagram of a cell phone 400 according to the invention. Cell phone 400 comprises a microphone 402 and a loudspeaker 404. The analog signal from microphone 402 gets sampled and converted to a digital format in A/D 406. The digitized speech is then supplied to a speech codec 408. As known, the digitized speech gets coded for transmission via antenna 410, preferably in terms of parameters descriptive of the speech in order to minimize bandwidth requirements of the transmission. The parameters transmitted enable reconstruction of the speech at the receiving end. Similarly, the signal received at antenna 410 describes the speech input from the remote party in terms of parameters that get processed by codec 408, converted to an analog signal by D/A 412 for play-out via loudspeaker 404. This type of processing is known in the art of digital cell phones. Cell phone 400 comprises a storage 414 that stores the parameters representative of the speech input by the user via microphone 402, and the parameters representative of the speech signal received from the remote user and rendered by loudspeaker 404 in normal operational use of phone 400. Now, for a rewind of the conversation recorded, the parameters stored in storage 414 get supplied to codec 408. Codec 408 then reconstructs the digitized conversation and has it rendered by loudspeaker 404. A user interface (UI) 416 is provided for user control of the rewind.

The data stored in storage 414 thus represents a conversation recorded. In a simple implementation of the invention, storage 414 comprises a FIFO and stores an amount of data equivalent to, e.g., one minute or a few minutes of conversation before a stored part gets overwritten. This enables or facilitates an instant rewind. This data can be sent, or otherwise be made available, to rendering software emulating or representing codec 408. For example, the user could copy or download the content of storage 414 onto a PDA, a set top box or a laptop, and have it rendered locally using codec software combined with speech-to-text conversion software, commercially available. The user could also have the data per recorded conversation stored at the laptop or PDA and transfer it as a file, e.g., as an email attachment.

In summary, the means of processing of the speech is already available at the digital cell phone, and little overhead is needed to implement the recording, automatic or user-selective, and the user-control (opt-out; record portion of current conversation) according to the invention.

The above invention addresses the recording of real time communications. Such communications are volatile, and recording has its use and advantages as explained above. This concept can be expanded to cover the functionality of a Personal Logbook. The user carries a capturing device (e.g., a microphone, a solid state camera) that captures audible and/or visual impressions and/or context information for being stored. The information is preferably stored with time stamps and/or location stamps. In the latter case, a GPS system or another location-finding technology (e.g., beacons) provides the data for the geographic location of the user at the time of the recording that particular piece of information. The collection of recordings forms a personal log or diary/journal. Capturing can be continuous, event-triggered (e.g., heart-beat of the user, detection of a specific sound, coming within range of a specific object, etc.), user-controllable (voice activated, push-button) or controllable by another party. In the latter case, a child can be given such a capturing device, integrated within a piece of clothing or bicycle. The device can be remotely activated by the parent at any time. The device sends the captured data to a remote server or stores it locally for download and post-processing later on.

Another example of volatile information exchange is Instant Messaging. Applying again the concept of the current invention, the string of messages, displayed in an Instant Messaging application or Chat Room application, gets copied to a non-volatile memory (e.g., HDD or solid state memory) for retrieval later on, e.g., automatically or upon specific user-input. In an automatic mode, the user may have specified in advance the size of memory to be allocated to the recording, similarly to the last 5-minute recording in the examples described above for the CE communication device. Currently, Instant Messaging text is available in the frame buffer of the PC for scrolling purposes, but there is no more permanent storage feature available to review the communication off-line.

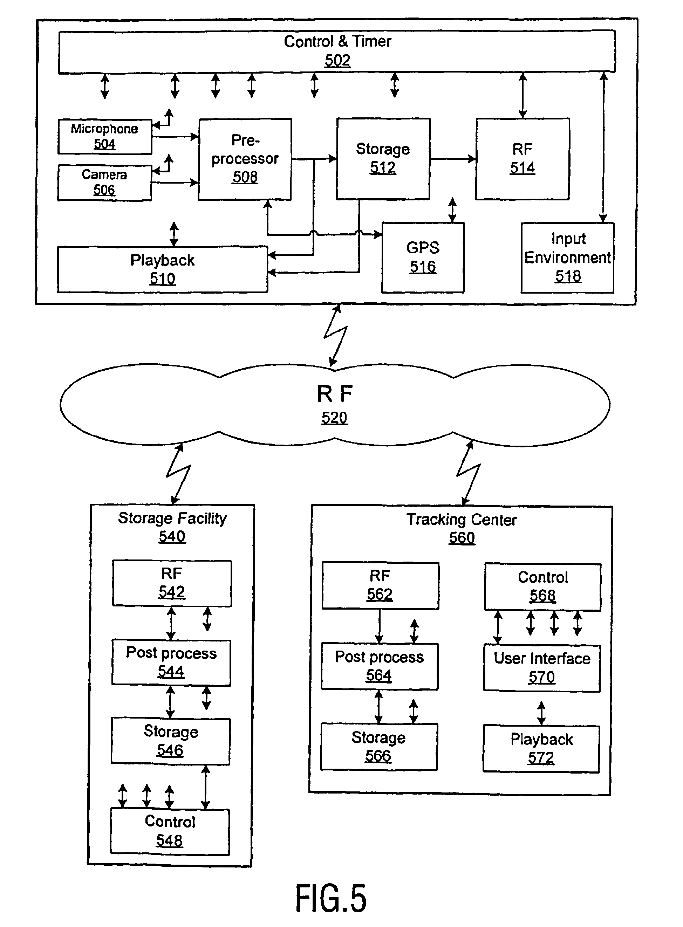

Fig. 5 is a block diagram of system with a capture/tracking device comprising portable consumer capture/tracking device 500, remote storage service facility 540, logbook tracking center 560 and RF transport medium 520. Device 500, facility 540 and the center 560 are enabled to communicate with each other over medium 520 in a wireless fashion. This can be based on an existing infrastructure such as using a GSM, Satellite radio, other cell-telephone network etc. whereby device 500, facility 540 and center 560 do not need to be in close proximity of each other. In another embodiment facility 540 is in a relative close proximity of device 500 and are enabled to communicate based on, e.g., a Bluetooth wireless protocol or a Wireless LAN protocol (e.g., based on 802.11a or 802.11b). In another embodiment, e.g., in which facility 540 is absent, device 500 is enabled to communicate directly with center 560.

Device 500 comprises control & timer module 502, microphone 504, camera 506, pre-processor 508, AV playback module 510, storage module 512, RF transceiver 514, GPS receiver 516 and an environment input 518. Device 500 is envisioned to be a highly portable CE device so that a user can easily carry it along. It is able to capture audio and video (AV) using microphone 504 and camera 506. The captured AV is passed to the pre-processor 508 where possibly a redundancy reduction takes place (e.g., by data compression and/or by passing only representative audio and or video frames). In the pre-processor unit contextual information may be added to the AV such as position data received from the GPS 516 and/or time data from the control & timer module 502 (the resultant data is now called AV-track data). AV track data is then stored in storage module 512. From storage AV track data is available for playback at module 510 and/or for transmission by the RF transceiver 514. The device 500 is under control of control & timer module 502.

Storage facility 540 comprises RF transceiver 542, post-processor 544, storage module 546 and control module 548. An important function of facility 540 is storage of AV track data that has been transmitted by device 500. After reception by RF transceiver 542 the AV track data may undergo post-processing in processor 544 (such as tagging of the AV track data with device and user data or other relevant metadata). Subsequently the modified AV track data is stored in 546 and available for transmission using RF transceiver 542, e.g., upon request from tracking center 560. Storage facility 540 is under control of module 548.

Tracking center 560 comprises RF transceiver 562, post-processor 564, storage module 566, user interface module 570, AV playback module 572 and control module 568. A possible important function of center 560 is to enable to track device 500 (e.g., being carried by a person or a moving object). Tracking center 560 enables position, time as well as audio-visual conditions monitoring and logging of device 500. Center 560 can either directly receive the AV-track data or receive it in a relayed fashion from facility 540 over the RF 520. Processor 564 may then process the received AV track date whereby, e.g., a logbook can created or whereby the received AV track data is transformed into a user presentable form. A subsequent resultant may the stored in module 566 for, e.g., a later playback using module 572. User interface module 570 provides a controller of center 560 to analyze or otherwise consume the data at hers/his convenience. The user interface also allows the controller, e.g., to enter commands that are relayed to device 500 (over RF 520 using transceiver 562 and 514). Such commands may include, as example but are not limited to, switch on/off recording of captured AV, change camera 506 zoom and focus, send an alert signal to be played at module 510, switch settings of pre-processor 508. Center 560 is controlled using module 568.

Furthermore, communications over medium 520 can be encrypted to provide additional security guarantees to the user of the device. The communications may also include a non-encrypted signal pattern, a so-called "recording signature", that enables a third party to detect the recording activity of device 500 without enabling them to decode the content of the communications. The feature may be used, e.g., for an automatic opt-in notification, as a deterrent in a personal security system, and etc... In another embodiment, device 500 is implemented, at least partially, as a distributed personal area network (PAN) using, e.g. BlueTooth. In the latter case camera 506, microphone504, storage 512, GPS receiver 516, have a separate RF network interface to communicate to transceiver 514. A software control application (not explicitly shown in fig. 5) running on module 502 enables device 500 to coordinate the activity of the input functionalities.

In yet another embodiment device 500 enables a user to create a personal diary by recording one or more types of data. Device 500 is enabled to, at least, record data representative of a current environment of the user and may be enabled to transmit recorded data. Data representative for the current environment may include, but is not limited to, audio, video, time, temperature, humidity, air-pressure and location data. It may also include data on the user such as heartbeat rhythm, body temperature, user-activity indication and etc. In this embodiment device 500 operates in an always-on mode, meaning that during its intended usage the device is best on most of the time. The user may still be allowed to switch the device on or off by hand. With camcorders and other known CE recording devices, the user is to determine what content is to be recorded. That is, the user selects what is relevant or interesting, and what is not, by manipulating the on-button and off-button at the time of recording. In the embodiment of the invention, the (recording) device 500 may capture input from the environment irrespective of the activities of the user. In the invention, the editing, e.g., deleting or post-processing, of recorded content may be done afterwards, e.g., in tracking center 560. Relevance or interest may have changed completely by that time with respect to that at the time of recording. In the known devices, the user him/herself is already editing by means of pre-processing: selecting what to record and what not. In the embodiment of the invention this selection can be postponed owing to the always-on feature.

Device 500 may further comprise a GPS 516 and/or an environment input 518 that can control the always-on mode. For instance when GPS 516 detects that device is outside a certain range or area the always-on recording may be switched on or switched off. GPS 516 may be regarded being a particular type of environment input. Environment input 518 may be used to input certain data that is representative for the current environment or on the user such as earlier mentioned temperature, humidity, air-pressure, heartbeat rhythm, body temperature, user activity indication. Data input by environment input 518 may be interpreted in device 500 and may cause the device to be controlled in various ways. For example device 500 may start or stop a recording or device 500 may start or stop a transmission based on certain limits exceeded, e.g., wherein the limits had been previously preset. The user may preset the limits or an operator, e.g., may preset them remotely using tracking center 560.

From reading the present disclosure, other modifications will be apparent to persons skilled in the art. Such modifications may involve other features which are already known in the design, manufacture and use of devices for recording and retrieving real time communications and which may be used instead of or in addition to features already described herein. The applicants hereby give notice that new claims may be formulated to such features during the prosecution of the present application or any further application derived there from.

The word "comprising", "comprise", or "comprises" as used herein should not be viewed as excluding additional elements. The singular article "a" or "an" as used herein should not be viewed as excluding a plurality of elements.

## Claims

1. A portable consumer electronics communication device (500) comprising:
- a first functionality (504, 506) adapted to enable a first recording of a real-time aural or video communication signal to a storage (512);
- a second functionality (516, 518) adapted to enable a second recording of contextual information to the storage wherein the contextual information can be used to put in a context with the real-time signal; and
- a third functionality comprising transmission means (514) adapted for transmission of, at least a part of, the real-time signal and the contextual information that has been recorded.

2. The device of claim 1, wherein the real-time signal comprises a conversation.

3. The device of claim 1, wherein the recording of the signal and the contextual information enables the creation of a personal logbook.

4. The device of claim 1, wherein the device (500) is integrated with a piece of clothing.

5. The device of claim 1, wherein the device is integrated with a means of transportation.

6. The device of claim 1, wherein the contextual information comprises a location stamp.

7. The device of claim 1, wherein at least part of the first recording and the second recording can be controlled remotely.

8. The device of claim 1, wherein at least part of the transmission can be controlled remotely.

9. The device of claim 1, wherein the device comprises a fourth functionality (508) adapted to enable filtering of the real-time signal to a part that is representative for the real-time signal before being recorded at the first recording.

10. The device of claim 1, wherein the device (500) is an object or a person tracking device whereby the device is enabled to provide the first recording of the real-time signal as well as the second recording of the contextual information from the storage (512).

11. The device of claim 1, wherein the third functionality comprises a capability to insert a recording signature in the transmission that enables a third party to detect a recording activity of the device.

12. A method of recording in a portable consumer electronics communication device (500), the method comprising:
- recording of a real-time audio or video communication signal to a storage (512);
- recording of contextual information to the storage (512) together with the real-time signal and wherein the contextual information can be used to put in a context with the real-time signal; and
- transmitting, at least a part of and upon request, the real-time signal and the contextual information that has been recorded.

13. The method of claim 12, wherein the real-time signal comprises a conversation.

14. The method of claim 12, wherein the contextual information comprises a location stamp.

15. The method of claim 12, further comprising remotely controlling the transmitting.

16. The method of claim 12, further comprising filtering of the real-time signal to a part that is representative for the real-time signal before being recorded at the first recording.

17. A computer program product comprising software code enabling a programmable device to function as a device (500) as defined in any one of the claims 1-11.

## Patentansprüche

1. Tragbare Unterhaltungselektronik-Kommunikationsvorrichtung (500), die Folgendes umfasst:
- eine erste Funktionalität (504, 506), die dafür eingerichtet ist, eine erste Aufzeichnung eines Echtzeit-Audio- oder -Videokommunikationssignals in einem Speicher (512) zu ermöglichen;
- eine zweite Funktionalität (516, 518), die dafür eingerichtet ist, eine zweite Aufzeichnung von Kontextinformationen in den Speicher zu ermöglichen, wobei die Kontextinformationen benutzt werden können, um in einen Zusammenhang mit dem Echtzeitsignal gebracht zu werden; und
- eine dritte Funktionalität mit Übertragungsmitteln (514), die dafür eingerichtet sind, zumindest einen Teil des Echtzeitsignals und der aufgezeichneten Kontextinformationen zu übertragen.

2. Vorrichtung nach Anspruch 1, wobei das Echtzeitsignal eine Konversation umfasst.

3. Vorrichtung nach Anspruch 1, wobei das Aufzeichnen des Signals und der Kontextinformationen das Erstellen eines persönlichen Logbuchs ermöglicht.

4. Vorrichtung nach Anspruch 1, wobei die Vorrichtung (500) in ein Kleidungsstück integriert ist.

5. Vorrichtung nach Anspruch 1, wobei die Vorrichtung in ein Transportmittel integriert ist.

6. Vorrichtung nach Anspruch 1, wobei die Kontextinformationen einen Positionsstempel umfassen.

7. Vorrichtung nach Anspruch 1, wobei sich zumindest ein Teil der ersten Aufzeichnung und der zweiten Aufzeichnung fernsteuern lässt.

8. Vorrichtung nach Anspruch 1, wobei sich zumindest ein Teil der Übertragung fernsteuern lässt.

9. Vorrichtung nach Anspruch 1, wobei die Vorrichtung eine vierte Funktionalität (508) umfasst, die dafür eingerichtet ist, das Filtern des Echtzeitsignals auf einen für das Echtzeitsignal repräsentativen Teil zu ermöglichen, bevor es bei der ersten Aufzeichnung aufgezeichnet wird.

10. Vorrichtung nach Anspruch 1, wobei die Vorrichtung (500) eine ein Objekt oder eine Person verfolgende Vorrichtung ist, und wobei die Vorrichtung sowohl die erste Aufzeichnung des Echtzeitsignals als auch die zweite Aufzeichnung der Kontextinformationen aus dem Speicher (512) bereitstellen kann.

11. Vorrichtung nach Anspruch 1, wobei die dritte Funktionalität eine Fähigkeit zum Einfügen einer Aufzeichnungssignatur in die Übertragung umfasst, die es einem Dritten ermöglicht, eine Aufzeichnungsaktivität der Vorrichtung zu detektieren.

12. Verfahren zum Aufzeichnen in einer tragbaren Unterhaltungselektronik-Kommunikationsvorrichtung (500), wobei das Verfahren Folgendes umfasst:
- Aufzeichnen eines Echtzeit-Audio- oder -Videokommunikationssignals in einem Speicher (512);
- Aufzeichnen von Kontextinformationen in dem Speicher (512) zusammen mit dem Echtzeitsignal, wobei die Kontextinformationen benutzt werden können, um in einen Zusammenhang mit dem Echtzeitsignal gebracht zu werden; und
- Übertragen zumindest eines Teils des Echtzeitsignals und der aufgezeichneten Kontextinformationen auf Anforderung.

13. Verfahren nach Anspruch 12, wobei das Echtzeitsignal eine Konversation umfasst.

14. Verfahren nach Anspruch 12, wobei die Kontextinformationen einen Positionsstempel umfassen.

15. Verfahren nach Anspruch 12, das weiterhin das Fernsteuern der Übertragung umfasst.

16. Verfahren nach Anspruch 12, das weiterhin das Filtern des Echtzeitsignals auf einen für das Echtzeitsignal repräsentativen Teil umfasst, bevor es bei der ersten Aufzeichnung aufgezeichnet wird.

17. Computerprogrammprodukt mit einem Softwarecode, der es einer programmierbaren Vorrichtung ermöglicht, als eine gemäß einem der Ansprüche 1-11 definierte Vorrichtung (500) zu funktionieren.

## Revendications

1. Dispositif de communication (500) d'électronique grand public portable comprenant:
une première fonctionnalité (504, 506) propre à permettre un premier enregistrement d'un signal de communication audio ou vidéo en temps réel dans un moyen de stockage (512);
une deuxième fonctionnalité (516, 518) propre à permettre un second enregistrement d'informations contextuelles dans le moyen de stockage dans lequel les informations contextuelles peuvent être utilisées pour un placement dans un contexte avec le signal en temps réel; et
une troisième fonctionnalité comprenant un moyen de transmission (514) propre à permettre la transmission d'au moins une partie du signal en temps réel et des informations contextuelles qui ont été enregistrées.

2. Dispositif suivant la revendication 1, dans lequel le signal en temps réel comprend une conversation.

3. Dispositif suivant la revendication 1, dans lequel l'enregistrement du signal et les informations contextuelles permet la création d'un journal personnel.

4. Dispositif suivant la revendication 1, dans lequel le dispositif (500) est intégré avec une pièce de tissu.

5. Dispositif suivant la revendication 1, dans lequel le dispositif est intégré avec un moyen de transport.

6. Dispositif suivant la revendication 1, dans lequel les informations contextuelles comprennent une estampille de localisation.

7. Dispositif suivant la revendication 1, dans lequel au moins une partie du premier enregistrement et du second enregistrement peut être commandée à distance.

8. Dispositif suivant la revendication 1, dans lequel au moins une partie de la transmission peut être commandée à distance.

9. Dispositif suivant la revendication 1, dans lequel le dispositif comporte une quatrième fonctionnalité (508) propre à permettre le filtrage du signal en temps réel en une partie qui est représentative du signal en temps réel avant son enregistrement lors du premier enregistrement.

10. Dispositif suivant la revendication 1, dans lequel le dispositif (500) est un dispositif de suivi de personne ou d'objet grâce auquel le dispositif est autorisé à fournir le premier enregistrement du signal en temps réel ainsi que le second enregistrement des informations contextuelles à partir du moyen de stockage (512).

11. Dispositif suivant la revendication 1, dans lequel la troisième fonctionnalité comprend une possibilité d'insérer une signature d'enregistrement dans la transmission qui permet à un troisième correspondant de détecter une activité d'enregistrement du dispositif.

12. Procédé d'enregistrement dans un dispositif de communication d'électronique grand public portable (500), le procédé comprenant:
- l'enregistrement d'un signal de communication vidéo ou audio en temps réel dans un moyen de stockage (512);
- l'enregistrement d'informations contextuelles dans le moyen de stockage (512) conjointement avec le signal en temps réel et dans lequel les informations contextuelles peuvent être utilisées pour un placement dans un contexte avec le signal en temps réel; et
- la transmission, au moins d'une partie et à la demande, du signal en temps réel et des informations contextuelles qui ont été enregistrées.

13. Procédé suivant la revendication 12, dans lequel le signal en temps réel comprend une conversation.

14. Procédé suivant la revendication 12, dans lequel les informations contextuelles comprennent une estampille de localisation.

15. Procédé suivant la revendication 12, comprenant en outre la commande à distance de la transmission.

16. Procédé suivant la revendication 12, comprenant en outre le filtrage du signal en temps réel en une partie qui est représentative du signal en temps réel avant son enregistrement lors du premier enregistrement.

17. Progiciel informatique comprenant un code logiciel qui permet à un dispositif programmable de fonctionner comme un dispositif (500) suivant l'une quelconque des revendications 1-11.
